(19) Europäisches Patentamt
European Patent Office
Office européen des brevets

(11) EP 2 814 864 B1

(12) EUROPÄISCHE PATENTSCHRIFT

(45) Veröffentlichungstag und Bekanntmachung des Hinweises auf die Patenterteilung:
16.09.2020 Patentblatt 2020/38

(51) Int Cl.:
C08G 63/00 (2006.01)    C08G 63/78 (2006.01)

(21) Anmeldenummer: 13705973.9

(22) Anmeldetag: 15.02.2013

(86) Internationale Anmeldenummer:
PCT/EP2013/053065

(87) Internationale Veröffentlichungsnummer:
WO 2013/120989 (22.08.2013 Gazette 2013/34)

(54) **VERFAHREN ZUR HERSTELLUNG EINES HOCHMOLEKULAREN, HETEROAROMATISCHEN POLYESTERS ODER COPOLYESTERS**

PROCESS FOR PREPARING A HIGH MOLECULAR WEIGHT HETEROAROMATIC POLYESTER OR COPOLYESTER

PROCÉDÉ DE PRÉPARATION D'UN POLYESTER OU COPOLYESTER HÉTÉROAROMATIQUE DE POIDS MOLÉCULAIRE ÉLEVÉ

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 17.02.2012 DE 102012003417

(43) Veröffentlichungstag der Anmeldung:
24.12.2014 Patentblatt 2014/52

(73) Patentinhaber: Uhde Inventa-Fischer GmbH
13509 Berlin (DE)

(72) Erfinder:
• HESS, Christopher
  16567 Schönfließ (DE)
• PAETZ, Caspar
  13353 Berlin (DE)

(74) Vertreter: Pfenning, Meinig & Partner mbB
Patent- und Rechtsanwälte
Theresienhöhe 11a
80339 München (DE)

(56) Entgegenhaltungen:
EP-A2- 2 327 742        WO-A1-2007/052847
DE-A1-102006 025 942    US-A- 3 644 291
US-A1- 2009 011 236     US-A1- 2011 028 678
US-A1- 2011 034 662     US-A1- 2011 124 839

• DATABASE WPI Week 200901 Thomson Scientific, London, GB; AN 2009-A17075 XP002706061, -& JP 2008 291244 A (MITSUBISHI CHEM CORP) 4. Dezember 2008 (2008-12-04)
• M.JIANG: J.POL.SCI. PART A: POLYMER CHEMISTRY, Bd. 50, 7. Dezember 2011 (2011-12-07), Seiten 1026-1036, XP009171562, DOI: 10.1002/pola.25859

**Beschreibung**

Die Erfindung betrifft ein kontinuierliches Verfahren zur Herstellung eines hochmolekularen, heteroaromatischen Polyesters bzw. Copolyesters, das mindestens drei Verfahrensschritten umfasst. In einem ersten Verfahrensschritt wird aus mindestens einer heteroaromatischen Dicarbonsäure oder dessen Diester oder dessen Säureanhydrid mit mindestens einem Alkohol, eine Paste oder bei erhöhter Temperatur eine homogene Lösung hergestellt. Diese Paste bzw. Lösung wird in einem zweiten Schritt zu einem Prepolymer umgesetzt und in der dritten Verfahrensstufe wird dieses erhaltene Prepolymer unter gegenüber Normalbedingungen vermindertem Druck polykondensiert oder copolykondensiert.

Im Stand der Technik sind seit vielen Jahrzehnten unterschiedliche Polymere für verschiedene Anwendungen bekannt. Beispielhaft sind hier Polyolefine, Polyester, Polyamide, Polyacrylate oder auch Polycarbonate zu nennen. Die Auswahl dieser unterschiedlichen Polymermaterialien richtet sich im allgemeinen nach dem Einsatzzweck und den angestrebten mechanischen Eigenschaften, wie z.B. Schlagzähigkeit oder Hitzebeständigkeit.

Problematisch bei diesen seit vielen Jahrzehnten bekannten Polymermaterialien ist allerdings, dass die Edukte zur Herstellung derartiger Polymere, wie z.B. die Terephthalsäure bzw. die Isophthalsäure, als aromatische Bausteine für Polyester aus synthetischen Quellen stammen. Auch ist die biologische Abbaubarkeit der dann resultierenden Polyester nur ungenügend. Am Markt besteht deshalb eine große Nachfrage nach Polymermaterialien, insbesondere nach Polyestern, bei denen Edukte zur Herstellung der Polyester eingesetzt werden, die im Wesentlichen aus nachwachsenden Rohstoffen gewonnen werden und wobei dann die hergestellten Polyester häufig auch eine biologische Abbaubarkeit aufweisen. Es hat dabei bereits bisher nicht an Versuchen gefehlt, derartige Polyester aus nachwachsenden Rohstoffen zu synthetisieren. Als Beispiele sind hierbei Polylactid wie auch Polyester zu nennen, die auf Basis von Furan-2,5-dicarbonsäure gebildet worden sind.

So wird in der WO 2010/077133 A1 ein Verfahren zur Herstellung von Polymeren beschrieben, die auf Basis von 2,5-Furandicarbonsäure und Diolen bzw. Polyolen erhalten worden sind. Das Verfahren nach der vorstehend genannten WO 2010/077133 schlägt vor, in einem ersten Schritt ein Prepolymer aus den vorstehend genannten Edukten zu bilden und dann in einem zweiten Schritt eine Polykondensation durchzuführen. Bezüglich des ersten Schrittes schlägt die WO 2010/077133 A1 vor, eine Umesterung einer Mischung aus 2,5-Furandicarboxylat mit einem Diol durchzuführen. Die Umesterung wird unter Verwendung eines Zinnkatalysators vorgenommen. Bezüglich der Polykondensation wird vorgeschlagen, diese unter reduziertem Druck ebenfalls in Gegenwart eines Zinnkatalysators durchzuführen.

Die US 2011/124839 A1 sieht ein Herstellungsverfahren eines flammhemmenden Polyestercopolymers vor, das in einem ersten Schritt die Zugabe eines Katalysators zu einer 2,5-Furandicarbonsäureverbindung, einem aliphatischen oder alicyclischen Diol, Itaconsäure und 9,10-Dihydro-9-oxa-10-phosphaphenanthren-10-oxid zur Gewinnung eines Oligomers aufweist und in einem zweiten Schritt die Zugabe eines Katalysators zu dem im ersten Schritt erhaltenen Oligomer zur Durchführung einer Polykondensation ausweist, wodurch das flammhemmende Polyestercopolymer erhalten wird.

Es hat sich aber nun gezeigt, dass diese aus dem Stand der Technik vorbekannte heteroaromatische Polyester in Bezug auf das zu erreichende Molekulargewicht in Kombination mit den physikalischen Eigenschaften, wie z.B. der Kerbschlagzähigkeit noch nicht den Anforderungen entspricht, die ansonsten für die Polyester des Standes der Technik, die z.B. aus Terephthalsäure und Diolen gebildet wurden, entsprechen. Auch wird dieses Verfahren nur in einzelnen Ansätzen (batchweise) durchgeführt, wobei in der Regel Abweichungen der Produktqualität von Ansatz zu Ansatz auftreten, und ein inhomogenes, daraus hergestelltes Mischprodukt resultiert.

Aufgabe der vorliegenden Erfindung ist es deshalb, ein großtechnisches, kontinuierliches Verfahren zur Herstellung von hochmolekularen Polyethylenfuranoaten oder Polybutylenfuranoaten, insbesondere auf Basis von 2,5-Furandicarbonsäure, vorzuschlagen, das zu Polyethylenfuranoaten oder Polybutylenfuranoaten führt, deren mechanischen und physikalischen Eigenschaften gegenüber dem Stand der Technik deutlich verbessert sind und die aufgrund der kontinuierlichen Herstellungsweise eine hohe Produktkonstanz aufweisen.

Die Aufgabe wird durch die Merkmale des Patentanspruchs 1 gelöst. Die Merkmale des Patentanspruchs 12 definieren ein erfindungsgemäßes Polyethylenfuranoat oder Polybutylenfuranoat. Die Unteransprüche geben bevorzugte Ausführungsformen an.

Erfindungsgemäß wird somit nach Patentanspruch 1 ein Verfahren zur Herstellung Herstellung von Polyethylenfuranoat oder Polybutylenfuranoat mit einem mittels GPC bestimmten durchschnittlichen Molekulargewicht für das Gewichtsmittel $M_w$ von mindestens 30.000 Da vorgeschlagen, das mindestens drei Stufen umfasst, wobei die dritte Stufe die Polykondensationsstufe zweistufig durchgeführt wird.

Wesentliches Element der vorliegenden Erfindung ist somit beim erfindungsgemäßen Verfahren, die spezielle Verfahrensführung bezüglich der Polykondensation. Gemäß der Erfindung wird vorgeschlagen, dass diese zweistufig ausgeführt wird, wobei das Veresterungs- bzw. Umesterungsprodukt aus der zweiten Stufe b) in einem Schritt c1) in ein Polyesterprepolymer bzw. zu einem Copolyesterprepolymer umgewandelt wird. Dieses Prepolymer wird dann in einem anschließenden Schritt c2) durch Polykondensation bzw. Copolykondensation zum Polyester bzw. Copolyester umgesetzt.

Der Polyester, der nach dem erfindungsgemäßen Verfahren erhalten wird, liegt nach Abkühlen bevorzugt in Granulatform vor und kann dann somit problemlos durch an und für sich im Stand der Technik bekannte Formwerkzeuge z.B. über einen Extruder mittels Extrusion oder Spritzguss zu geformten Artikeln verarbeitet werden.

Die intrinsische Viskosität des erzeugten Polyesters nach dem Polykondensationsschritt c2) beträgt 0,60 dl/g bis 2,0 dl/g, bevorzugt von 0,80 dl/g bis 1,60 dl/g, besonders bevorzugt von 1,0 dl/g bis 1,40 dl/g. Die Bestimmung der Lösungsviskosität erfolgt dabei entsprechend ISO 1628-5 an einer Lösung des Polyesters in einer Konzentration von 0,5 g/dL in einem geeigneten Lösungsmittel wie z.B. m-Kresol oder Hexafluorisopropanol oder einem Lösungsmittelgemisch wie z.B. Phenol/Dichlorbenzol unter Ermittlung der Durchflusszeiten von Lösung und Lösungsmittel in geeigneten Kapillaren des Typs Ubbelohde bei 25,0°C. Aus der aus dem Quotienten der Durchflusszeiten der Lösung und des Lösungsmittels erhaltenen relative Viskosität $\eta_{rel}$ wird durch Anwendung der Berechungsformel gemäß Solomon-Ciuta die intrinsische Viskosität $\eta_{intr}$ erhalten,

$$\eta_{intr} = \frac{1}{c}\sqrt{2 \cdot (\eta_{rel} - 1 - \ln\eta_{rel})}$$

wobei für die Konzentration c der Lösung der Wert 0,5 g/dL zu verwenden ist.

Das durchschnittliche Molekulargewicht für das Gewichtsmittel Mw beträgt mindestens 30.000 Da, bestimmt nach der Methode der Gelpermeationschromatographie (GPC) mit angeschlossenem Brechungsindexdetektor anhand einer Lösung der Polyester im Lösungsmittel HFIP (2 mg/mL), kalibrierung gegen Polystyrol Standards mit einer engen Molmassenverteilung.

Das erfindungsgemäße Verfahren wird nachstehend in Bezug auf die einzelnen Verfahrensschritte näher erläutert.

Erfindungsgemäß ist vorgesehen, dass zur kontinuierlichen Herstellung Herstellung von Polyethylenfuranoat oder Polybutylenfuranoat mit einem mittels GPC bestimmten durchschnittlichen Molekulargewicht für das Gewichtsmittel Mw von mindestens 30.000 Da in einem ersten Verfahrensschritt mindestens eine heteroaromatische Dicarbonsäure ausgewählt aus der Gruppe bestehend aus 2,5-Furandicarbonsäure, 3,4-Furandicarbonsäure, 2,4-Furandicarbonsäure, 2,3-Furandicarbonsäure und/oder Kombinationen oder Mischungen hiervon oder deren Diester oder Säureanhydride und mindestens ein Alkohol ausgewählt aus der Gruppe bestehend aus Ethylenglycol, Diethylenglycol, Triethylenglycol, 1,3-Butandiol, 1,4-Butandiol und/oder Kombinationen oder Mischungen hiervon durch Mischen zu einer Paste oder durch Mischen bei Temperaturen von 10°C bis 250°C zu einer homogenen Lösung verarbeitet werden. Das Verfahren zeichnet sich somit dadurch aus, dass zunächst aus den Edukten eine entsprechende Mischung hergestellt wird. Dadurch wird erreicht, dass die Edukte im vorbestimmten molaren Verhältnis in einer homogenen Mischung vorliegen, so dass eine möglichst vollständige Umsetzung in der nächsten Stufe erreicht wird. Es ist bevorzugt, wenn das stöchiometrische Verhältnis der Gesamtheit der mindestens einen heteroaromatischen Dicarbonsäure und/oder hiervon abgeleitet Diestern oder Säureanhydriden mit 2 bis 12 C-Atomen zur Gesamtheit des mindestens einen Alkohols mit 2 bis 12 C-Atomen von 1 : 0,5 bis 1 : 5,0, bevorzugt von 1 : 0,9 bis 1 : 3,0, besonders bevorzugt von 1 : 1,1 bis 1 : 2,0 beträgt. Beim Verfahrensschritt a) werden dabei bevorzugt Temperaturen zwischen 50 und 180 °C eingestellt.

Die nach Verfahrensstufe a) wie vorstehend näher beschrieben hergestellte Lösung bzw. Paste wird dann in der nächsten Stufe gemäß Verfahrensschritt b) einer Umesterung bzw. Veresterung unterzogen. Bevorzugt enthält dabei das Veresterungsprodukt bzw. Umesterungsprodukt den Diester zu mindestens 10 Gew.-%, bevorzugt zu 20 bis 98 Gew.-%, weiter bevorzugt zu 40 bis 95 Gew.-% und ganz besonders bevorzugt von 60 bis 90 Gew.-%. Das Verfahrensprodukt nach Schritt b) enthält neben dem Diester Oligomere aus der mindestens einen heteroaromatischen Dicarbonsäure ausgewählt aus der Gruppe bestehend aus 2,5-Furandicarbonsäure, 3,4-Furandicarbonsäure, 2,4-Furandicarbonsäure, 2,3-Furandicarbonsäure und/oder Kombinationen oder Mischungen hiervon und dem mindestens einen Alkohol ausgewählt aus der Gruppe bestehend aus Ethylenglycol, Diethylenglycol, Triethylenglycol, 1,3-Butandiol, 1,4-Butandiol und/oder Kombinationen oder Mischungen hiervon. Das Gewichtsverhältnis des Veresterungsproduktes nach Schritt b) zur Summe der zugeführten Paste oder Lösung aus mindestens einer heteroaromatischen Dicarbonsäure ausgewählt aus der Gruppe bestehend aus 2,5-Furandicarbonsäure, 3,4-Furandicarbonsäure, 2,4-Furandicarbonsäure, 2,3-Furandicarbonsäure und/oder Kombinationen oder Mischungen hiervon und/oder hiervon abgeleiteten Säureanhydriden oder Diestern mit dem mindestens einen aliphatischen Alkohol ausgewählt aus der Gruppe bestehend aus Ethylenglycol, Diethylenglycol, Triethylenglycol, 1,3-Butandiol, 1,4-Butandiol und/oder Kombinationen oder Mischungen hiervon von 1 : 0,2 bis 1 : 10, bevorzugt von 1 : 0,5 bis 1 : 2 beträgt. Beim Verfahrensschritt b) ist es weiterhin bevorzugt, wenn das stöchiometrische Verhältnis der Gesamtheit der mindestens einen Dicarbonsäure, die ausgewählt ist aus der Gruppe bestehend aus 2,5-Furandicarbonsäure, 3,4-Furandicarbonsäure, 2,4-Furandicarbonsäure, 2,3-Furandicarbonsäure und/oder Kombinationen oder Mischungen hiervon, und/oder hiervon abgeleiteten Säureanhydriden zur Gesamtheit des mindestens einen Alkohols, der ausgewählt ist aus der Gruppe bestehend aus Ethylenglycol, Diethylenglycol, Triethylenglycol, 1,3-Butandiol, 1,4-Butandiol und/oder Kombinationen oder Mischungen hiervon, von 1 : 0,5 bis 1 :

5,0, bevorzugt von 1 : 0,9 bis 1 : 3,0, besonders bevorzugt von 1 : 1,1 bis 1 : 2,0 eingestellt wird.

Bevorzugte Temperaturen für die Durchführung des Verfahrensschrittes b) sind Temperaturen von 120 bis 300 °C, bevorzugt von 160 bis 250 °C. Bevorzugte Drücke beim Verfahrensschritt b) sind moderater Unterdruck bzw. atmosphärischer Druck oder Überdruck, insbesondere Drücke von 0,9 bis 3 bar.

Es kann für den Verfahrensschritt b) noch weiterhin vorteilhaft sein, wenn während des Verfahrensschrittes b) und/oder im Anschluss an den Schritt b) Nebenprodukte, die bei Normalbedingungen ab 60 °C oder bei höheren Temperaturen dampfförmig vorliegen, insbesondere Wasser oder Methanol, bereits bei diesem Verfahrensschritt zumindest partiell oder ganz entfernt werden.

Wenn das Verfahren wie vorstehend beschrieben durchgeführt wird, wird in Schritt b) ein Reaktionsprodukt erhalten, das eine intrinsische Viskosität (IV) von 0,04 dl/g bis 0,12 dl/g, bevorzugt von 0,05 dl/g bis 0,10 dl/g, besonders bevorzugt von 0,06 dl/g bis 0,08 dl/g aufweist.

Wesentliches Element der vorliegenden Erfindung ist wie bereits eingangs dargestellt, dass die Poly- bzw. Copolykondensationsstufe c) zweistufig durchgeführt wird. Es hat sich dabei als besonders günstig herausgestellt, wenn bei Schritt c1) bei einem Druck von 0,1 bis 2 bar, bevorzugt von 0,15 bar bis 1 bar, besonders bevorzugt von 0,2 bis 0,7 bar, gearbeitet wird und wenn Temperaturen von 160 bis 300 °C, bevorzugt von 200 bis 260 °C eingestellt werden. Beim Verfahrensschritt c2) ist es günstig, wenn unter gegenüber Normalbedingungen vermindertem Druck, bevorzugt bei einem Druck von 0,1 mbar und 30 mbar, weiter bevorzugt von 0,2 mbar und 10 mbar und insbesondere bevorzugt von 0,4 mbar und 5 mbar gearbeitet wird und die Temperaturen 200 bis 300 °C, bevorzugt von 220 bis 270 °C betragen.

In Bezug auf die eingesetzten Katalysatoren, die beim erfindungsgemäßen Verfahren sowohl bei Schritt b) und/oder bei Schritt c) verwendet werden können, wird bevorzugt ein Katalysator verwendet, der schwermetallfrei ist. In der WO 2010/077133 A1, die bereits eingangs erläutert worden ist, wird als Katalysator bevorzugt ein Zinnkatalysator eingesetzt. Ein Zinnkatalysator ist ein schwermetallhaltiger Katalysator. Derartige Katalysatoren sollen beim erfindungsgemäßen Verfahren möglichst vermieden werden. In einer bevorzugten Ausführungsform umfasst das erfindungsgemäße Verfahren somit in Bezug auf die Katalysatoren alle an und für sich im Stand der Technik bekannten Katalysatoren mit Ausnahme von Zinnkatalysatoren. Bevorzugte Katalysatoren, die beim erfindungsgemäßen Verfahren eingesetzt werden können, sind titanhaltige Katalysatoren, insbesondere Titanalkoholate und/oder von organischen Säuren abgeleitete Titansalze, wie z.B. Titanoxalat, Titanzitrat und/oder Titanlactat. Bevorzugt sind weiterhin antimonhaltige Katalysatoren wie das Antimonacetat. Der Katalysator kann in Stufe b) bevorzugt in einer Mengenkonzentration von 10 bis 20.000 ppm, besonders bevorzugt von 100 bis 5.000 ppm, bezogen auf die Gewichtssumme aus heteroaromatischer Dicarbonsäure, Alkohol und Veresterungsprodukt zugegeben werden. Bei Zugabe in die Endstufe c) sind die gleichen Konzentrationen bevorzugt, d.h. Mengenkonzentrationen von 10 bis 20.000 ppm, bevorzugt von 1.000 bis 5.000 ppm bezogen auf das aus Stufe b) erhaltene Reaktionsprodukt. Die Erfindung umfasst weiterhin Ausführungsformen, bei denen während der Verfahrensstufen b) und/oder c) noch mindestens ein Cokatalysator oder mindestens ein Stabilisator zum Reaktionsgemisch, insbesondere zum Präpolymer und/oder zum Polymer zugegeben wird.

Neben Cokatalysatoren und Stabilisatoren können wie im Stand der Technik bekannt weiter Additive vorhanden sein.

Als Additive sind beispielhaft folgende zu nennen: Hitzestabilisatoren, Antioxidantien, Nukleierungsmittel, Flammschutzmittel, Antistatika, Verarbeitungshilfsmittel, UV-Stabilisatoren sowie Verstärkungsmaterialien oder Füllstoffe.

Wie im Stand der Technik aus der Polyesterchemie bekannt, kann auch ein Kettenverlängerungsschritt durch Zugabe von 0,01 bis 2 Gew.-% bezogen auf die Polymermasse einer reaktiven Verbindung ausgewählt aus der Gruppe der di- oder höherfunktionalen Epoxide, Carbodiimide oder Diisocyanate unterzogen werden.

Das erfindungsgemäße Verfahren sieht weiterhin vor, sofern die intrinsische Viskosität, die mit dem Verfahren nach Verfahrensschritt c) erreicht wird, für die angestrebten Anwendungen noch nicht ausreichend ist, dass das Reaktionsprodukt nach dem Schritt c) nach dem Abkühlen und Überführen in eine Granulat- und/oder Pulverform sowie Kristallisation einer Nachkondensation in der festen Phase unterzogen wird. Derartige Nachkondensationen in der festen Phase (SSP) sind aus der Polyesterchemie bekannt. Die dort bekannten Verfahrensbedingungen können auch für die Nachkondensation beim erfindungsgemäß hergestellten heteroaromatischen Polyester angewandt werden. Bevorzugte Temperaturen für die Nachkondensation der beschriebenen Polyester in der Festphase liegen im Bereich von 160 bis 210 °C. Zur Nachkondensation wird, wie im Stand der Technik bekannt, ein getrocknetes Inertgas im Gegenstrom in einem geeigneten Reaktor zu den Granulaten geführt. Als Inertgas kann dabei ein Inertgas aus der Gruppe Stickstoff, Kohlendioxid und/oder Argon eingesetzt werden. Alternativ kann bei der Festphasennachkondensation (SSP) auch bevorzugterweise mit einem Druckniveau von 0,001 bis 0,2 bar im angegebenen Temperaturbereich gearbeitet werden.

Die nach dem erfindungsgemäßen Verfahren nach Verfahrensschritt c) hergestellten Granulate und/oder Pulver können auch einer Nachbehandlung in der Weise unterzogen werden, dass die Granulate und/oder das Pulver von Reaktionsprodukten befreit werden. Solche flüchtige Reaktionsprodukte oder Reaktionsnebenprodukte können z.B. Acetaldehyd, Methyldioxolan, Acrolein, Wasser oder Tetrahydrofuran sein. Die Befreiung von diesen Nebenprodukten kann dadurch erfolgen, dass ein Gasstrom oder eine Mischung aus Gasen aus der Gruppe Luft, Stickstoff oder $CO_2$ mit einem Taupunkt von bevorzugt -100 °C bis 10 °C, besonders bevorzugt von -70 °C bis -20 °C bei einer Temperatur von 100 bis 200 °C, bevorzugt von 150 bis 180 °C unterzogen werden. Auch können die beiden Verfahrensstufen der Nachkondensation in der festen Phase und die Nachbehandlung zur Entfernung flüchtiger Verbindungen in einer gemeinsamen Verfahrensstufe im angegebenen Temperaturbereich mit den angegebenen Gasen oder Gasmischungen oder bei Unterdruck erfolgen.

Durch die beiden vorstehend beschriebenen Maßnahmen können die mechanischen und physikalischen Eigenschaften der hergestellten Granulate und somit auch dann der entsprechenden Formteile nachhaltig verbessert werden.

Von der apparativen Seite aus ist es bevorzugt, wenn die Verfahrensstufe b) der Veresterung bzw. Umesterung in einem Hydrozyklon mit außenliegendem Wärmeaustauscher durchgeführt wird. Für die Polykondensation und hier für die Verfahrensstufe c1), d.h. für die Herstellung des Prepolymers, hat sich eine Fallfilmkaskade, bei der gleichzeitig eine Entfernung von Kondensationsprodukten und/oder flüchtigen Nebenprodukten durchgeführt wird, als vorteilhaft erwiesen. Der Hydrozyklon und die Fallfilmkaskade können auch in einem einzigen Reaktor zusammengefasst sein. Ein derartiger Reaktor ist in der EP 1 678 236 A1 näher beschrieben.

Für den Verfahrensschritt c2), d.h. für die Polykondensation, hat es sich als vorteilhaft herausgestellt, wenn hier mit einem Käfigreaktor unter rascher und hochwirksamer Entfernung von Kondensationsprodukten und flüchtigen Nebenprodukten gearbeitet wird. Besonders vorteilhaft hierbei sind Käfigreaktoren, wie sie in der EP 0 719 582 B1 beschrieben sind.

Die Erfindung betrifft weiterhin hochmolekulare heteroaromatische Polyester bzw. Copolyester, die nach einem Verfahren, wie vorstehend detailliert erläutert, wobei in dem Verfahren vor und/oder während des Durchführens des Schrittes b) und/oder c) mindestens ein von organischen Säuren abgeleitetes Titansalz zum in der jeweiligen Stufe vorliegenden Reaktionsgemisch gegeben wird, hergestellt worden sind.

Bei den erfindungsgemäßen Polyethylenfuranoaten oder Polybutylenfuranoaten ist es dabei bevorzugt, wenn diese 1 mol-% bis 100 mol-%, bevorzugt 50 mol-% bis 100 mol-% bezogen auf die Summe der eingesetzten Dicarbonsäuren einer heteroaromatischen Dicarbonsäure, bevorzugt 2,5-Furandicarbonsäure enthalten und die mindestens eine Diolkomponente aus der Gruppe Ethylenglykol, Propandiol oder 1,4-Butandiol ausgewählt ist.

Der Polyester oder Copolyester der Erfindung zeichnet sich weiterhin bevorzugt dadurch aus, dass er 0,1 bis 100 % und besonders bevorzugt zwischen 50 und 99 % bezogen auf die Summe aller Kohlenstoffatome solche Kohlenstoffatome enthält, die aus nachwachsenden Quellen zugänglich sind, bevorzugt unter Verwendung von Monomeren aus der Gruppe von biobasierender 2,5-Furandicarbonsäure oder deren Ester, biobasierender Bernsteinsäure, biobasierender Adipinsäure, biobasierender Sebacinsäure, biobasierendem Ethylenglycol, biobasierendem Propandiol, biobasierendem 1,4-Butandiol, biobasierendem Isosorbit oder biobasierender Milchsäure. Eine Vielzahl der mittels der Erfindung zugänglichen Copolyestern zeichnen sich weiterhin dadurch aus, dass sie mindestens eine heteroaromatische Dicarbonsäure in einer Menge von 20 bis 80 mol-%, bevorzugt 40 bis 60 mol-% und mindestens eine aliphatische Dicarbonsäure in einer Menge von 80 bis 20 mol-% und bevorzugt von 60 bis 40 mol-% bezogen auf die Summe aller eingesetzten Dicarbonsäuren enthalten und dadurch gemäß EN 13432 biologisch abbaubar sind.

Die Erfindung wird nachfolgend anhand eines Beispiels näher erläutert.

Kontinuierliche Herstellung von Polyethylenfuranat:

In einer Pilotanlage (Aufbau nach der EP 1 448 658 B1 bzw. WO 2007/140925 A1) wurde zunächst ein Lösung von Furandicarbonsäuredimethylester in Ethylenglykol hergestellt, indem in einen auf 120°C vorbeheizten Mischbehälter 500 kg Furandicarbonsäuredimethylester gegeben wurden. Nachfolgend wurden nun 290 kg auf 80 °C vorgewärmtes Ethylenglykol über einen Zeitraum von 2 Stunden zum Furandicarbonsäuredimethylester gleichmäßig und unter Rühren und unter Stickstoffüberleitung zugegeben. Nach weiteren 2 Stunden war der Furandicarbonsäuredimethylester vollständig gelöst und die Lösung wurde in einen auf 100°C vorgeheizten Vorlagebehälter abgelassen. Von dort wurde die Lösung von Furandicarbonsäurediemethylester in Ethylenglykol kontinuierlich mittels einer Dosierpumpe einem Veresterungs- respektive Umesterungsreaktor zugeführt. Hierin befand sich das Umesterungsprodukt in einem Naturumlauf, wobei die aus dem Wärmetauscher austretende Mischung von in Ethlyenglykol gelöstem Furandicarbonsäuredimethylester mit Umesterungsprodukt auf eine Temperatur von 230°C eingestellt wurde. Die Umesterung wurde einem Druck von 1000 - 1050 mbar betrieben. In die Veresterungs- Umesterungsstufe wurde der in bei Raumtemperatur flüssig vorliegenden Katalysator z.B. Titantetrabutylat miitels einer geeigneten Dosierpumpe zudosiert, sodass im Endprodukt ein Gehalt von 350 ppm aktivem Ti erreicht wurde. Die Zugabe und Entnahme von Umesterungsprodukt wurden so geregelt, dass eine mittlere Verweilzeit von 2 Stunden in der Umesterungsstufe resultiert. Das bei der Umesterung anfallende Methanol wurde über Kopf abgezogen und einer Trennkolonne zugeführt. In ihr wird Methanol von mitüberdestilliertem Ethylenglykol abgetrennt. Das im Sumpf der Kolonne entnommene Ethylenglykol wurde auf eine Temperatur von 80 °C abgekühlt und einem Ethlylenglykolvorratstank zugeführt. Das am Sumpf des Umesterungsstufe entnommene Umesterungsprodukt wurde mittels einer Schmelzepumpe in die Nachveresterungsstufe überführt. Der Zulauf und Ablauf in die Nachveresterung ist so geregelt, dass eine mittlere Verweilzeit von 90 Minuten in der Nachveresterungsstufe eingehalten wurde. Die Temperatur in der Nachveresterungsstufe betrug 240°C, es herrschte ein Druck von 700 mbar. Das am Sumpf der Nachveresterungsstufe entnommene Produkt wurde mittels einer Schmelzepumpe in die Prepolymerisationsstufe (Stufe c1) überführt. Der Zulauf und Ablauf in die Prepolymerisationsstufe ist so geregelt, dass eine mittlere Verweilzeit von 120 Minuten in der Prepolymerisationsstufe eingehalten wurde. Die Temperatur in der Prepolymerisationsstufe betrug dabei 250°C, es herrschte ein Druck von 10 mbar. Das am Sumpf des Prepolymerisationsstufe entnommene Prepolymer wurde mittels einer Schmelzepumpe in den Polykondensationsreaktor (Stufe c2) überführt. Der Zulauf und Ablauf in den Polykondensationsreaktor ist so geregelt, dass eine mittlere Verweilzeit von 90 Minuten während der Polykondensation eingehalten wird. Die Temperatur in der Polykondensationsstufe betrug dabei 260°C, es herrschte ein Druck von 0,8 mbar. Die bei der Polykondensation entstandenen Dämpfe von Etylenglykol und Reste von Methanol wurden ebenfalls der Trennkolonnen zugeführt. Die Ausführung des Polykondensationsreaktors entspricht dabei dem in der EP 0718582B1 beschriebenen. Über die am Austritt des Polykondensationsreaktors angebrachte Schmelzepumpe wurde die Schmelze mit einem Fluss von 20 kg/h einer Unterwassergranuliereinheit zugeführt. Nach dem Abschleudern von Wasser wurde Polyethylenfuranat Granulat mit einem Wert für die intrinsische Viskosität von 1,05 dL/g erhalten.

**Patentansprüche**

1. Kontinuierliches Verfahren zur Herstellung von Polyethylenfuranoat oder Polybutylenfuranoat mit einem mittels GPC bestimmten durchschnittlichen Molekulargewicht für das Gewichtsmittel Mw von mindestens 30.000 Da, bei dem

a) mindestens eine heteroaromatische Dicarbonsäure ausgewählt aus der Gruppe bestehend aus 2,5-Furandicarbonsäure, 3,4-Furandicarbonsäure, 2,4-Furandicarbonsäure, 2,3-Furandicarbonsäure und/oder Kombinationen oder Mischungen hiervon oder deren Diester oder Säureanhydride und mindestens ein Alkohol ausgewählt aus der Gruppe bestehend aus Ethylenglycol, Diethylenglycol, Triethylenglycol, 1,3-Butandiol, 1,4-Butandiol und/oder Kombinationen oder Mischungen hiervon durch Mischen zu einer Paste oder durch Mischen bei Temperaturen von 10°C bis 250°C zu einer homogenen Lösung verarbeitet werden

b) die in Schritt a) erhaltene Paste oder Lösung zu einem mindestens einen Diester und/oder mindestens einen Oligoester enthaltendes Veresterungsprodukt, das aus der mindestens einen heteroaromatischen Dicarbonsäure mit dem mindestens einen Alkohol gebildet ist, umgesetzt wird, und

c) das aus Stufe b) erhaltene Reaktionsprodukt unter gegenüber Normalbedingungen vermindertem Druck polykondensiert oder copolykondensiert wird,

**dadurch gekennzeichnet, dass** die Poly- oder Copolykondensationsstufe c) zweistufig ausgeführt wird, wobei

in einem ersten Schritt $c_1$) aus dem aus Stufe b) erhaltenen Reaktionsprodukt durch Polykondensation oder Copolykondensation ein Polyesterprepolymer oder Copolyesterprepolymer bei einem Druck von 0,1 bar bis 2 bar hergestellt und in einem sich anschließenden Schritt $c_2$) aus dem Polyesterprepolymer oder Copolyesterprepolymer aus Schritt $c_1$) durch Polykondensation oder Copolykondensation bei einem Druck von 0,1 mbar bis 30 mbar der Polyester oder Copolyester erhalten wird,

wobei das in Schritt b) erzeugte Reaktionsprodukt auf eine intrinsische Viskosität (I.V.) von 0,04 dL/g bis 0,12 dL/g gemessen nach ISO 1628-5 eingestellt wird und wobei die intrinsische Viskosität des Polyesters nach Schritt $c_2$) 0,60 dl/g bis 2,0 dl/g beträgt.

2. Verfahren nach Anspruch 1, **dadurch gekennzeichnet, dass**

a) Schritt $c_1$)

i. bei einem Druck von 0,15 bar bis 1,0 bar, insbesondere von 0,2 bar bis 0,7 bar, und/oder
ii. bei Temperaturen von 160 bis 300 °C, bevorzugt von 200 bis 260 °C, und/oder

b) Schritt $c_2$)

i. unter gegenüber Normalbedingungen vermindertem Druck, bevorzugt bei einem Druck von 0,2 mbar bis 10 mbar, insbesondere von 0,4 mbar bis 5 mbar, und/oder
ii. bei Temperaturen von 200 bis 300 °C, bevorzugt von 220 bis 270 °C,

durchgeführt wird.

3. Verfahren nach mindestens einem der Ansprüche 1 oder 2, **dadurch gekennzeichnet, dass** in Stufe a)

a) das stöchiometrische Verhältnis der Gesamtheit der mindestens einen heteroaromatischen Dicarbonsäure und/oder der hiervon abgeleiteten Diestern oder Säureanhydriden zur Gesamtheit des mindestens einen Alkohols von 1:0,5 bis 1:5,0, bevorzugt von 1:0,9 bis 1:3,0, besonders bevorzugt 1:1,1 bis 1:2,0 beträgt; und/oder
b) die Paste oder Lösung bei Temperaturen zwischen 50°C bis 180°C hergestellt wird.

4. Verfahren nach mindestens einem der vorhergehenden Ansprüche, **dadurch gekennzeichnet, dass** nach Schritt b)

a) das Veresterungsprodukt bzw. Umesterungsprodukt den Diester zu mindestens 10 Gew.-%, bevorzugt von 20 bis 98 Gew.-%, weiter bevorzugt von 40 bis 95 Gew.-%, besonders bevorzugt von 60 bis 90 Gew.-% enthält; und/oder
b) das Veresterungsprodukt neben dem Diester Oligomere aus der mindestens einen heteroaromatischen Dicarbonsäure und dem mindestens einen Alkohol mit durchschnittlich 2 bis 10, bevorzugt 3 bis 6 Wiederholungseinheiten enthält; und/oder
c) das Gewichtsverhältnis des Veresterungsproduktes zur Summe der zugeführten Paste oder Lösung aus der mindestens einen heteroaromatischen Dicarbonsäure und/oder hiervon abgeleiteten Säureanhydriden oder Diestern mit dem mindestens einen aliphatischen Alkohol mit 1:0,2 bis 1:10, bevorzugt von 1:0,5 bis 1:2, beträgt; und/oder
d) bei der Herstellung des Veresterungsproduktes das stöchiometrische Verhältnis der Gesamtheit der mindestens einen heteroaromatischen Dicarbonsäure und/oder hiervon abgeleiteten Säureanhydriden oder Diester zur Gesamtheit des mindestens einen Alkohol von 1:0,5 bis 1:5,0, bevorzugt von 1:0,9 bis 1:3,0, besonders bevorzugt 1:1,1 bis 1:2,0, beträgt.

5. Verfahren nach mindestens einem der vorhergehenden Ansprüche, **dadurch gekennzeichnet, dass** die Reaktion in Schritt b) bei Temperaturen von 120 bis 300 °C, bevorzugt von 160 bis 250 °C durchgeführt wird.

6. Verfahren nach mindestens einem der vorhergehenden Ansprüche, **dadurch gekennzeichnet, dass** während Schritt b) und/oder im Anschluss an Schritt b) Nebenprodukte oder Kondensationsprodukte, die bei Normalbedingungen ab 60 °C oder bei höheren Temperaturen dampfförmig vorliegen, insbesondere Wasser oder Methanol, zumindest partiell oder ganz entfernt werden.

7. Verfahren nach mindestens einem der vorhergehenden Ansprüche, **dadurch gekennzeichnet, dass** vor und/oder während des Durchführens des Schrittes b) und/oder c) mindestens ein Katalysator, bevorzugt ein schwermetallfreier Katalysator, besonders bevorzugt ein Titan-haltiger Katalysator, insbesondere Titanalkoholate und/oder von organischen Säuren abgeleitete Titansalze, wie z.B. Titanoxalat, Titancitrat und/oder Titanlactat, oder ein Antimonhaltiger Katalysator, zum in der jeweiligen Stufe vorliegenden Reaktionsgemisch gegeben wird.

8. Verfahren nach Anspruch 8, **dadurch gekennzeichnet, dass** der Katalysator

a) in Stufe b) in einer Mengenkonzentration von 10 bis 20.000 ppm, bevorzugt von 100 bis 5.000 ppm, bezogen auf die Gewichtssumme aus heteroaromatischer Dicarbonsäure, aliphatischem Alkohol und Veresterungsprodukt zugegeben wird und/oder
b) in Stufe c) in einer Mengenkonzentration von 10 bis 20.000 ppm, bevorzugt von 100 bis 5.000 ppm, bezogen auf das aus Stufe b) erhaltene Reaktionsprodukt zugegeben wird.

9. Verfahren nach einem der vorhergehenden Ansprüche, **dadurch gekennzeichnet, dass**

a) vor und/oder während der Durchführung des Schrittes c) mindestens ein Cokatalysator und/oder mindestens ein Stabilisator zum Reaktionsgemisch, insbesondere zum Prepolymer und/oder Polymer gegeben wird; und/oder
b) das Reaktionsprodukt vor, während oder nach Schritt c) einem Kettenverlängerungsschritt durch Zugabe von 0,01 bis 2 Gew.% bezogen auf die Polymermasse einer reaktiven Verbindung ausgewählt aus der Gruppe der di- oder höherfunktionellen Epoxide, Carbodiimide oder Diisocyanate unterzogen wird; und/oder
c) das vor, während oder nach Schritt c) erhaltene Reaktionsprodukt nach dem Abkühlen und Überführen in eine Granulat- und/oder Pulverform sowie Kristallisation einer Nachkondensation in der Festphase bei einer Temperatur von 170 - 230°C unter Durchleitung eines Inertgases oder einer Mischung von Inertgasen aus der Gruppe Stickstoff, Kohlendioxid, Argon oder durch Absenken auf einem gegenüber Normalbedingungen reduzierten Druck von Druckniveau . 0,01 bis 0,2 bar unterzogen wird; und/oder
d) das vor, während oder nach Schritt c) erhaltene Reaktionsprodukt nach dem Abkühlen und Überführen in die feste Phase und Kristallisation in einer Granulatform und/oder als Pulver einer Entfernungsprozedur von einem oder mehreren flüchtigen Reaktionsnebenprodukten aus der Gruppe Acetaldehyd, Methyldioxolan, Acrolein, Wasser oder Tetrahydrofuran unter Durchleiten eines Gasstromes oder einer Mischung aus Gasen aus der Gruppe Luft, Stickstoff oder Kohlendioxyd mit einem Taupunkt von -100°C bis 10°C und bevorzugt von -70°C bis - 20°C bei einer Temperatur von 100 bis 200°C bevorzugt 150 bis 180°C unterzogen wird.

10. Verfahren nach mindestens einem der vorhergehenden Ansprüche, **dadurch gekennzeichnet, dass**

a) das in Schritt b) erzeugte Reaktionsprodukt auf eine intrinsische Viskosität (I.V.) von 0,05 dL/g bis 0,10 dL/g, besonders bevorzugt von 0,06 dL/g bis 0,08 dL/g und/oder
b) der in Schritt c), insbesondere der in Schritt $c_2$) erzeugte Polyester auf eine intrinsische Viskosität (I.V.) von 0,80 dL/g bis 1,60 dL/g, bevorzugt von 1,0 dL/g bis 1,40 dL/g eingestellt wird.

11. Verfahren nach mindestens einem der vorhergehenden Ansprüche, **dadurch gekennzeichnet, dass**

a) die Verfahrensstufe b) der Veresterung/ Umesterung in einem Hydrozyklon mit außen liegendem Wärmetauscher; und/oder
b) die Verfahrensstufe c1) in einer Fallfilmkaskade unter Entfernungen von Kondensationsprodukten und/oder flüchtigen Nebenprodukten; und/oder
c) die Verfahrensstufe c2) in einem Käfigreaktor unter rascher und hochwirksamer Entfernungen von Kondensationsprodukten und flüchtigen Nebenprodukten; durchgeführt wird.

12. Polyethylenfuranoat oder Polybutylenfuranoat mit einem mittels GPC bestimmten durchschnittlichen Molekulargewicht für das Gewichtsmittel Mw von mindestens 30.000 Da, **dadurch gekennzeichnet, dass** er nach einem Verfahren nach mindestens einem der Ansprüche 1 bis 11 hergestellt worden ist, wobei in dem Verfahren vor und/oder während des Durchführens des Schrittes b) und/oder c) mindestens ein von organischen Säuren abgeleitetes Titansalz zum in der jeweiligen Stufe vorliegenden Reaktionsgemisch gegeben wird.

**Claims**

1. Continuous method for the production of polyethylene furanoate or polybutylene furanoate having an average molecular weight, determined by means of GPC, for the weight average Mw of at least 30,000 Da, in which

a) at least one heteroaromatic dicarboxylic acid selected from the group consisting of 2,5-furandicarboxylic acid, 3,4-furandicarboxylic acid, 2,4-furandicarboxylic acid, 2,3-furandicarboxylic acid and/or combinations or mixtures hereof or the diesters or acid anhydrides thereof and at least one alcohol selected from the group consisting of ethylene glycol, diethylene glycol, triethylene glycol, 1,3-butanediol, 1,4-butanediol and/or combinations or mixtures hereof are processed by mixing to form a paste or by mixing at temperatures of 10°C to 250°C to form a homogeneous solution,
b) the paste or solution obtained in step a) is converted to form an esterification product which comprises at least one diester and/or at least one oligoester and which is formed from the at least one heteroaromatic dicarboxylic acid with the at least one alcohol, and
c) the reaction product obtained from step b) is polycondensed or copolycondensed at reduced pressure relative to normal conditions, **characterised in that** the poly- or copolycondensation step c) is implemented in two steps,
there being produced, in a first step $c_1$) from the reaction product obtained from step b) by polycondensation or copolycondensation, a polyester prepolymer or copolyester prepolymer at a pressure of 0.1 bar to 2 bar, and
there being obtained, in a subsequent step $c_2$), from the polyester prepolymer or copolyester prepolymer from step $c_1$) by polycondensation or copolycondensation at a pressure of 0.1 mbar to 30 mbar, the polyester or copolyester, the reaction product produced in step b) being adjusted to an intrinsic viscosity (I.V.) of 0.04 dl/g to 0.12 dl/g measured according to ISO 1628-5 and the intrinsic viscosity of the polyester after step $c_2$) being 0.60 dl/g to 2.0 dl/g.

2. Method according to claim 1, **characterised in that**

a) step $c_1$) is implemented

i. at a pressure of 0.15 bar to 1.0 bar, in particular of 0.2 bar to 0.7 bar, and/or
ii. at temperatures of 160 to 300°C, preferably of 200 to 260°C, and/or

b) step $c_2$) is implemented

i. at reduced pressure relative to normal conditions, preferably at a pressure of 0.2 mbar to 10 mbar, in particular of 0.4 mbar to 5 mbar, and/or
ii. at temperatures of 200 to 300°C, preferably of 220 to 270°C.

3. Method according to at least one of the claims 1 or 2, **characterised in that**, in step a),

   a) the stoichiometric ratio of the totality of the at least one heteroaromatic dicarboxylic acid and/or of the diesters or acid anhydrides derived herefrom to the totality of the at least one alcohol is of 1 : 0.5 to 1 : 5.0, preferably of 1 : 0.9 to 1 : 3.0, particularly preferably 1 : 1.1 to 1 : 2.0; and/or
   b) the paste or solution is produced at temperatures between 50°C to 180°C.

4. Method according to at least one of the preceding claims, **characterised in that**, after step b),

   a) the esterification product or transesterification product comprises the diester up to at least 10% by weight, preferably from 20 to 98% by weight, further preferably from 40 to 95%, particularly preferably from 60 to 90% by weight; and/or
   b) the esterification product comprises, in addition to the diester, oligomers made of the at least one heteroaromatic dicarboxylic acid and the at least one alcohol with on average 2 to 10, preferably 3 to 6 repetition units; and/or
   c) the weight ratio of the esterification product to the sum of the supplied paste or solution made of the at least one heteroaromatic dicarboxylic acid and/or acid anhydrides or diesters derived herefrom with the at least one aliphatic alcohol is 1 : 0.2 to 1 : 10, preferably of 1 : 0.5 to 1 : 2; and/or
   d) in the production of the esterification product, the stoichiometric ratio of the totality of the at least one heteroaromatic dicarboxylic acid and/or acid anhydrides or diesters derived herefrom to the totality of the at least one alcohol is of 1 : 0.5 to 1 : 5.0, preferably of 1 : 0.9 to 1 : 3.0, particularly preferably 1 : 1.1 to 1 : 2.0.

5. Method according to at least one of the preceding claims, **characterised in that** the reaction in step b) is implemented at temperatures of 120 to 300°C, preferably of 160 to 250°C.

6. Method according to at least one of the preceding claims, **characterised in that**, during step b) and/or subsequent to step b), byproducts or condensation products which are present in vapour form at normal conditions from 60°C or at higher temperatures, in particular water or methanol, are removed at least partially or entirely.

7. Method according to at least one of the preceding claims, **characterised in that**, before and/or during implementation of step b) and/or c), at least one catalyst, preferably a heavy metal-free catalyst, particularly preferably a titanium-containing catalyst, in particular titanium alcoholates and/or titanium salts, derived from organic acids, such as e.g. titanium oxalate, titanium citrate and/or titanium lactate, or an antimony-containing catalyst, is added to the reaction mixture present in the respective step.

8. Method according to claim 8, **characterised in that** the catalyst

   a) in step b), is added in a quantity concentration of 10 to 20,000 ppm, preferably of 100 to 5,000 ppm, relative to the weight total of the heteroaromatic dicarboxylic acid, aliphatic alcohol and esterification product and/or
   b) in step c), is added in a quantity concentration of 10 to 20,000 ppm, preferably of 100 to 5,000 ppm, relative to the reaction product obtained from step b).

9. Method according to one of the preceding claims, **characterised in that**

   a) before and/or during implementation of step c), at least one cocatalyst and/or at least one stabiliser is added to the reaction mixture, in particular to the prepolymer and/or polymer; and/or
   b) the reaction product is subjected, before, during or after step c), to a chain-lengthening step, by addition of 0.01 to 2% by weight, relative to the polymer mass, of a reactive compound selected from the group of di- or higher-functional epoxides, carbodiimides or diisocyanates; and/or
   c) the reaction product, obtained before, during or after step c), after cooling and transferring into a granulate- and/or powder form and also crystallisation, is subjected to a postcondensation in the solid phase at a temperature of 170 - 230°C by conducting through an inert gas or a mixture of inert gases from the group nitrogen, carbon dioxide, argon or by lowering to a reduced pressure, relative to normal conditions, of pressure level 0.01 to 0.2 bar; and/or
   d) the reaction product, obtained before, during or after step c), after cooling and transferring into the solid phase and crystallisation in a granulate form and/or as powder, is subjected to a removal procedure of one or more volatile reaction byproducts from the group acetaldehyde, methyldioxolane, acrolein, water or tetrahydrofuran by conducting through a gas flow or a mixture of gases from the group air, nitrogen or carbon dioxide with a dew point of -100°C to 10°C and preferably of -70°C to -20°C at a temperature of 100 to 200°C, preferably of 150 to 180°C.

10. Method according to at least one of the preceding claims, **characterised in that**

a) the reaction product produced in step b) is adjusted to an intrinsic viscosity (I.V.) of 0.05 dl/g to 0.10 dl/g, particularly preferably of 0.06 dl/g to 0.08 dl/g and/or
b) the polyester produced in step c), in particular that in step c$_2$), is adjusted to an intrinsic viscosity (I.V.) of 0.80 dl/g to 1.60 dl/g, preferably of 1.0 dl/g to 1.40 dl/g.

11. Method according to at least one of the preceding claims, **characterised in that**

a) method step b) of esterification/transesterification is implemented in a hydrocyclone with an externally situated heat exchanger; and/or
b) method step c$_1$) is implemented in a falling-film cascade with removal of condensation products and/or volatile byproducts; and/or
c) method step c$_2$) is implemented in a cage reactor with rapid and highly effective removal of condensation products and volatile byproducts.

12. Polyethylene furanoate or polybutylene furanoate having an average molecular weight, determined by means of GPC, for the weight average Mw of at least 30,000 Da, **characterised in that** it was produced according to a method according to at least one of the claims 1 to 11, there being added, in the method before and/or during implementation of step b) and/or c), at least one titanium salt derived from organic acids to the reaction mixture present in the respective step.

**Revendications**

1. Procédé continu de préparation de poly(furannoate d'éthylène) ou de poly(furannoate de butylène) ayant une masse moléculaire moyenne en masse Mw, déterminée par chromatographie en phase gazeuse, d'au moins 30 000 Da, dans lequel

a) on met en œuvre par mélange pour obtenir une pâte ou par mélange à des températures de 10 °C à 250 °C pour obtenir une solution homogène, au moins un acide dicarboxylique hétéroaromatique choisi dans le groupe consistant en l'acide 2,5-furannedicarboxylique, l'acide 3,4-furannedicarboxylique, l'acide 2,4-furannedicarboxylique, l'acide 2,3-furannedicarboxylique et/ou les combinaisons ou mélanges de ceux-ci, ou leurs diesters ou anhydrides d'acide, et au moins un alcool choisi dans le groupe consistant en l'éthylèneglycol, le diéthylèneglycol, le triéthylèneglycol, le 1,3-butanediol, le 1,4-butanediol et/ou les combinaisons ou mélanges de ceux-ci,
b) on convertit la pâte ou la solution obtenue dans l'étape a) en un produit d'estérification contenant au moins un diester et/ou au moins un oligoester, produit d'estérification qui est formé à partir de l'au moins un acide dicarboxylique hétéroaromatique et de l'au moins un alcool, et
c) on soumet à une polycondensation ou à une copolycondensation le produit de réaction obtenu dans l'étape b), sous une pression réduite par rapport aux conditions normales,
**caractérisé en ce que** l'étape de poly- ou de copolycondensation c) est réalisée en deux étapes, dans lesquelles
dans une première étape c$_1$), on prépare à partir du produit de réaction obtenu dans l'étape b), par polycondensation ou copolycondensation, un prépolymère de polyester ou un prépolymère de copolyester sous une pression de 0,1 bar à 2 bar, et
dans une étape suivante c$_2$), on obtient le polyester ou le copolyester à partir du prépolymère de polyester ou du prépolymère de copolyester de l'étape c$_1$) par polycondensation ou copolycondensation sous une pression de 0,1 mbar à 30 mbar,
le produit de réaction obtenu dans l'étape b) étant ajusté à une viscosité intrinsèque (I.V.) de 0,04 dl/gt à 0,12 dl/g, mesurée selon ISO 1628-5, et la viscosité intrinsèque du polyester après l'étape c$_2$) étant de 0,60 dl/g à 2,0 dl/g.

2. Procédé selon la revendication 1, **caractérisé en ce qu'**on met en œuvre

a) l'étape c$_1$)

i. sous une pression de 0,15 bar à 1,0 bar, en particulier de 0,2 bar à 0,7 bar, et/ou
ii. à des températures de 160 à 300 °C, de préférence de 200 à 260 °C et/ou

b) l'étape c$_2$)

i. sous une pression réduite par rapport aux conditions normales, de préférence sous une pression de 0,2 mbar à 10 mbar, en particulier de 0,4 mbar à 5 mbar, et/ou
ii. à des températures de 200 à 300 °C, de préférence de 220 à 270 °C.

3. Procédé selon au moins l'une des revendications 1 ou 2, **caractérisé en ce que**, dans l'étape a),

a) le rapport stoechiométrique de la totalité de l'au moins un acide dicarboxylique hétéroaromatique et/ou des diesters ou anhydrides d'acides qui en dérivent à la totalité de l'au moins un alcool est de 1:0,5 à 1:5,0, de préférence de 1:0,9 à 1:3,0, d'une manière particulièrement préférée de 1:1,1 à 1:2,0 ; et/ou

b) la pâte ou la solution est préparée à des températures comprises entre 50 °C et 180 °C.

**4.** Procédé selon au moins l'une des revendications précédentes, **caractérisé en ce que**, après l'étape b),

a) le produit d'estérification ou le produit de transestérification contient le diester en une quantité d'eau moins 10 % en poids, de préférence de 20 à 98 % en poids, plus préférentiellement de 40 à 95 % en poids, d'une manière particulièrement préférée de 60 à 90 % en poids ; et/ou

b) le produit d'estérification contient, outre le diester, des oligomères de l'au moins un acide dicarboxylique hétéroaromatique et de l'au moins un alcool, avec en moyenne 2 à 10, de préférence 3 à 6 motifs répétitifs ; et/ou

c) le rapport en poids du produit d'estérification à la somme de la pâte ou de la solution amenée, de l'au moins un acide dicarboxylique hétéroaromatique et/ou des anhydrides d'acide ou des diesters qui en dérivent et de l'au moins un alcool aliphatique est de 1:0,2 à 1:10, de préférence de 1:0,5 à 1:2 ; et/ou

d) lors de la préparation du produit d'estérification, le rapport stoechiométrique de la totalité de l'au moins un acide dicarboxylique hétéroaromatique et/ou des anhydrides d'acide ou des diesters qui en dérivent, à la totalité de l'au moins un alcool, est de 1:0,5 à 1:5,0, de préférence de 1:0,9 à 1:3,0, d'une manière particulièrement préférée de 1:1,1 à 1:2,0.

**5.** Procédé selon au moins l'une des revendications précédentes, **caractérisé en ce que** la réaction de l'étape b) est mise en œuvre à des températures de 120 à 300 °C, de préférence de 160 à 250 °C.

**6.** Procédé selon au moins l'une des revendications précédentes, **caractérisé en ce que**, pendant l'étape b) et/ou après l'étape b), les sous-produits ou produits de condensation qui se présentent sous forme vapeur dans les conditions normales à partir de 60 °C ou à des températures plus élevées, en particulier l'eau ou le méthanol, sont au moins partiellement ou en totalité éliminés.

**7.** Procédé selon au moins l'une des revendications précédentes, **caractérisé en ce que**, avant et/ou pendant la mise en œuvre de l'étape b) et/ou de l'étape c), on ajoute au mélange réactionnel présent dans l'étape considérée au moins un catalyseur, de préférence un catalyseur exempt de métaux lourds, d'une manière particulièrement préférée un catalyseur contenant du titane, en particulier des alcoolates de titane et/ou des sels de titane qui dérivent d'acides organiques, tels que par exemple l'oxalate de titane, le citrate de titane et/ou le lactate de titane, ou un catalyseur contenant de l'antimoine.

**8.** Procédé selon la revendication 8, **caractérisé en ce que** le catalyseur est

a) dans l'étape b), ajouté selon une concentration pondérale de 10 à 20 000 ppm, de préférence de 100 à 5000 ppm, par rapport au poids total de l'acide dicarboxylique hétéroaromatique, de l'alcool aliphatique et du produit d'estérification, et/ou

b) dans l'étape c), ajouté à une concentration pondérale de 10 à 20 000 ppm, de préférence de 100 à 5000 ppm, par rapport au produit de réaction obtenu dans l'étape b).

**9.** Procédé selon l'une des revendications précédentes, **caractérisé en ce que**

a) avant et/ou pendant la mise en œuvre de l'étape c), on ajoute au moins un co-catalyseur et/ou au moins un stabilisant au mélange réactionnel, en particulier au prépolymère et/ou au polymère ; et/ou

b) on soumet le produit de la réaction avant, pendant ou après l'étape c), à une étape d'extension de chaîne par addition de 0,01 à 2 % en poids, par rapport à la masse du polymère, d'un composé réactif choisi dans le groupe des époxydes, des carbodiimides ou des diisocyanates difonctionnels ou à fonctionnalité plus élevée ; et/ou

c) on soumet le produit de réaction obtenu avant, pendant ou après l'étape c), après le refroidissement et la conversion en une forme granulaire et/ou pulvérulente, et après cristallisation, à une post-condensation en phase solide à une température de 170 à 230 °C, par passage d'un gaz inerte ou d'un mélange de gaz inertes du groupe consistant en l'azote, le dioxyde de carbone, l'argon, ou par abaissement à une pression réduite par rapport aux conditions normales, correspondant à un niveau de pression de 0,01 à 0,2 bar ; et/ou

d) on soumet le produit de réaction obtenu avant, pendant ou après l'étape c), après le refroidissement et la conversion en la phase solide et la cristallisation sous forme granulaire et/ou pulvérulente, à une opération d'élimination d'un ou plusieurs sous-produits de réaction volatils du groupe consistant en l'acétaldéhyde, le méthyldioxolanne, l'acroléine, l'eau ou le tétrahydrofuranne, par passage d'un courant gazeux ou d'un mélange de gaz du groupe consistant en l'air, l'azote ou le dioxyde de carbone, ayant un point de rosée de -100 °C à 10 °C et de préférence de -70 °C à -20 °C à une température de 100 à 200 °C, de préférence de 150 à 180 °C.

**10.** Procédé selon au moins l'une des revendications précédentes, **caractérisé en ce qu'**on ajuste

a) le produit de réaction préparé dans l'étape b) à une viscosité intrinsèque (I.V.) de 0,05 dl/g à 0,10 dl/g, d'une manière particulièrement préférée de 0,06 dl/g à 0,08 dl/g, et/ou
b) le polyester produit dans l'étape c), en particulier dans l'étape $c_2$), à une viscosité intrinsèque (I.V.) de 0,80 dl/g à 1,60 dl/g, de préférence de 1,0 dl/g à 1,40 dl/g.

**11.** Procédé selon au moins l'une des revendications précédentes, **caractérisé en ce qu'**on met en œuvre

a) l'étape b) d'estérification/transestérification dans un hydrocyclone comportant un échangeur de chaleur extérieur ; et/ou
b) l'étape $c_1$) dans une cascade à film descendant, avec élimination des produits de condensation et/ou des sous-produits volatils ; et/ou
c) l'étape $c_2$) dans un réacteur à cage, avec élimination rapide et à grande efficacité de produits de condensation et de sous-produits volatils.

**12.** Poly(furannoate d'éthylène) ou poly(furannoate de butylène) ayant une masse moléculaire moyenne en masse Mw, déterminée par chromatographie en phase gazeuse, d'au moins 30 000 Da, **caractérisé en ce qu'**il a été préparé par un procédé selon au moins l'une des revendications 1 à 11, au moins un sel de titane qui dérive d'acides organiques étant, dans le procédé, avant et/ou pendant la mise en œuvre de l'étape b) et/ou c), ajouté au mélange réactionnel présent dans l'étape considérée.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010077133 A1
- WO 2010077133 A
- US 2011124839 A1
- EP 1678236 A1

- EP 0719582 B1
- EP 1448658 B1
- WO 2007140925 A1
- EP 0718582 B1